# EUROPEAN PATENT APPLICATION

(11) **EP 0 957 304 A2**
(43) Date of publication of application: **17.11.1999**
(21) Application number: 99303776.1
(22) Date of filing: 14.05.1999
(51) Int. Cl.: F16L 29/00

(54) **Coupling**

(30) Priority: 15.05.1998 EP 98303876
(71) Applicant: SATCHWELL CONTROL SYSTEMS LIMITED, Slough Berkshire SL1 4UH (GB)
(72) Inventor: Matthews, Dene, Slough, Berkshire SL1 4UH (GB)
(74) Representative: Haley, Stephen

(57) **Abstract**

A coupling formed from plastics material for coupling between two components in a fluid flow path comprises a generally hollow body which is slidably connectable in a fluid tight manner to the two components, and which includes a valve means for selectively opening or closing the fluid flow path through the generally hollow body.

## Description

It is common in the plumbing industry, and in particular in heating and ventilation systems, to wish to disconnect components from the system for repair or replacement. In this case, it is necessary to break the fluid flow path through the system to remove the component, and therefore it is necessary to first isolate the component to prevent leakage. This in turn may require the complete shut down of the system and possibly the draining of the fluid in the system.

It would be possible to provide taps at each possible location where the system may need to be isolated, however the cost and size of taps makes this impractical.

A further problem when disconnecting a component from a system is that there may be little room available for moving the component away from the pipe to which it is connected, and therefore it is difficult to separate the component from the system and reconnect the component to the system. This problem is made worse when the component is heavy, for example a radiator or water tank, or when the component is in a difficult location for access.

According to the present invention, there is provided a coupling for coupling between two components in a fluid flow path comprises a generally hollow body which is slidably connectable in a fluid tight manner to the two components, and which includes a valve means for selectively opening or closing the fluid flow path through the generally hollow body, and, wherein the coupling is made from a plastics material.

In use, the coupling according to the present invention can be slid onto one component of a fluid flow path, for example a pipe while the other component, for example a radiator, can be positioned in the required location. The coupling can then be slid along the first component towards and onto the second component to join the two components. Due to the fluid tight connection between the coupling and the components, the fluid flow path between the two components is complete. When it is necessary to remove one of the components, for example for servicing or replacement, the valve in the coupling can be closed, thereby isolating the component to be removed. The coupling can then be slid away from the component to be removed, but retaining the fluid tight seal with the other component and therefore preventing leakage of the fluid. As the coupling is remote from the component to be removed, it is easy to remove the component even where there is insufficient space to move the components apart. When the component is to be reconnected, the component may be located, the coupling slid into fluid tight connection with the component, and the valve opened to complete the fluid connection between the components.

The invention therefore provides a relatively cheap and small isolation unit able to isolate a component in a fluid flow path which may need to be removed, and further allows the components to be removed and replaced without the need to separate the component from the remainder of the system in a location where there is limited room or access.

Preferably the housing of the coupling includes an O-ring at at least one of the internal ends, allowing the coupling to be pushed over a pipe and allowing the coupling to slide with respect to the pipe whilst retaining a fluid tight seal.

It is preferred that an O-ring seal is provided at both internal ends of the housing.

The valve included in the coupling is preferably a manually operated valve allowing the valve to simply be actuated by a user to close the fluid flow path through the coupling. The valve may be in the form of a disc which is rotatable between a first position generally parallel to the fluid flow through the coupling to allow the fluid to flow, and a second position generally transverse to the fluid flow to shut off the fluid flow path through the coupling, or may be a ball which has a hole through it and can be turned so the hole is aligned with the coupling to allow fluid to flow or so the hole is not aligned with the coupling to shut off the fluid flow.

The coupling is made of a plastics material, for example FORTRON (Trade Mark). It is advantageous for the coupling to be coupled to plastics material pipes since these have a tighter tolerance than metal pipes, and this ensures a fluid tight connection between the coupling and the pipe is maintained.

The coupling is preferably of such a length that it is able to slide at least 20mm along a pipe to which it is connected. This is generally an adequate amount of movement to achieve the advantages of the present invention.

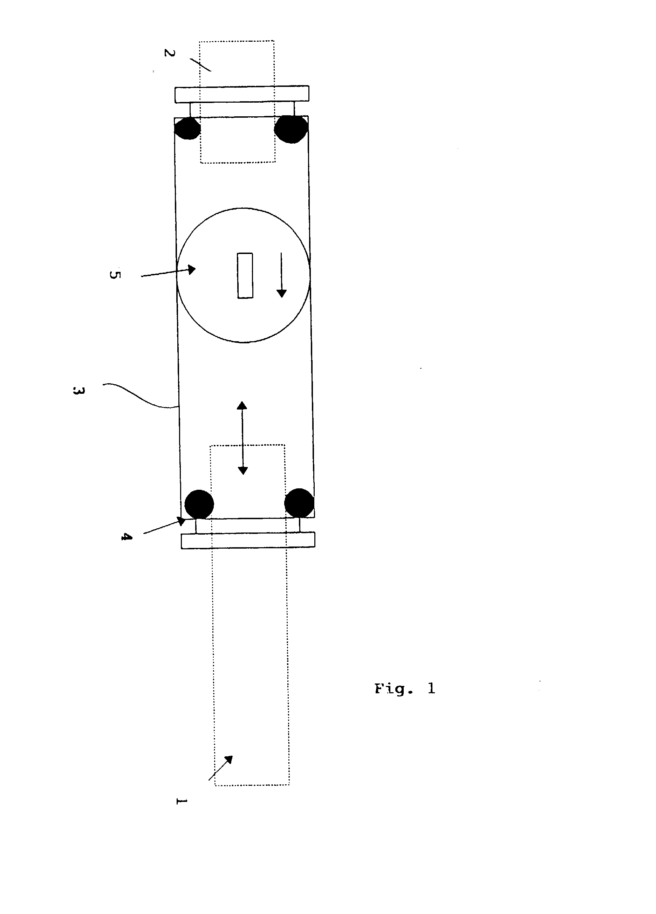

An example of the present invention will be described in accordance with the accompanying drawing which shows a cross section through a coupling connected to two pipes in a fluid flow path.

The coupling comprises a hollow cylindrical body 3 of FORTRON (Trade Mark). A disc or ball 5 is provided in the hollow body 3. The disc 5 has a shape and size corresponding to the internal dimensions of the body 3. The disc 5 is manually movable between a position in which it is generally parallel to the longitudinal axis of the housing 3 as shown in the drawing and a position in which it is perpendicular to the longitudinal axis of the housing 3. When the disc 5 is parallel to the longitudinal axis of the housing 3, fluid is able to flow through the housing substantially unimpaired by the disc 5. When the disc 5 is perpendicular to the longitudinal axis of the housing 3, as the shape of the disc 5 corresponds to the internal shape of the housing 3, the disc 5 blocks the passage through the housing 3 and thereby prevents the flow of fluid through the coupling.

Where a ball is provided rather than a disc, the ball has a hole through its centre. By aligning the hole with the axis of the housing 3, fluid can flow through the coupling. By turning the ball so the hole lies transverse to the housing 3, the fluid flow is shut off.

An O-ring 4 is provided internally at each end of the housing 3. For simplicity only one O-ring is shown in the drawing. The O-ring 4 has an internal diameter corresponding to the external diameter of a pipe 1 to be coupled by the coupler.

In use, the coupling is used to couple two pipes 1,2 in a fluid flow path. The pipes 1,2 may be short lengths of pipe for connection to an element in the fluid flow path, for example a stub to a radiator or control element, or may be long lengths of pipe linking various components in the system. When first installed, the coupling is slid onto the end of one pipe 1. As the internal diameter of the O-ring 4 is of the same size as the external diameter of the pipe 1, a fluid tight connection is made between the housing 3 and the pipe 1. The housing 3 is slid onto the pipe 1 so that the pipe 1 projects into the housing 3.

The other pipe 2 to which the pipe 1 is to be coupled is positioned in the desired location in generally coaxial alignment with the pipe 1. The housing 3 is then slid along the pipe 1 towards the pipe 2 so that the pipe 2 extends into the housing 3. A seal is created between an O-ring (not shown) and the pipe 2. The disc 5 is then aligned with the longitudinal axis of the housing 3 to allow fluid to flow from the pipe 1 through the housing 3 and into the pipe 2.

When the connection between the pipes 1,2 needs to be disconnected, for example to allow for the repair or replacement of a component in the system, the disc 5 is manually turned 90° so that it lies in a plane perpendicular to the longitudinal axis of the housing 3, and thereby shuts off the fluid flow through the housing 3. The coupling is then able to slide onto either pipe 1,2 and off the other pipe 1,2. As the disc 5 closes the flow path through the housing 3, fluid cannot flow from the pipe 1,2 to which the housing 3 remains connected and therefore there will be no leakage of fluid. The other pipe 1,2 can be removed. When the pipes 1,2 are to be reconnected, the pipes 1,2 are positioned with respect to each other, the housing 3 is slid to bridge the pipes 1,2 and the disc 5 rotated to lie in a plane parallel to the longitudinal axis of the housing 3 to re-establish the fluid communication between the pipes 1,2.

## Claims

1. A coupling for coupling between two components in a fluid flow path comprises a generally hollow body which is slidably connectable in a fluid tight manner to the two components, and which includes a valve means for selectively opening or closing the fluid flow path through the generally hollow body, and, wherein the coupling is made from a plastics material.

2. A coupling according to claim 1, wherein the housing of the coupling includes an O-ring at at least one of the internal ends, allowing the coupling to be pushed over a pipe and allowing the coupling to slide with respect to the pipe whilst retaining a fluid tight seal.

3. A coupling according to claim 1, wherein an O-ring seal is provided at both internal ends of the housing.

4. A coupling according to any preceding claim, wherein the valve included in the coupling is a manually operated valve.

5. A coupling according to any preceding claim, wherein the valve is in the form of a disc which is rotatable between a first position generally parallel to the fluid flow through the coupling to allow the fluid to flow, and a second position generally transverse to the fluid flow to shut off the fluid flow path through the coupling.

6. A coupling according to any of claims 1 to 4, wherein the valve is a ball which has a hole through it and can be turned so the hole is aligned with the coupling to allow fluid to flow or so the hole is not aligned with the coupling to shut off the fluid flow.
